# EUROPÄISCHE PATENTSCHRIFT

(11) **EP 2 722 239 B1**
(45) Veröffentlichungstag und Bekanntmachung des Hinweises auf die Patenterteilung: **01.04.2015**
(21) Anmeldenummer: 12007233.5
(22) Anmeldetag: 19.10.2012
(51) Int. Cl.: B60R 22/46

(54) **Antriebseinheit für ein Sicherheitssystem eines Fahrzeugs**
Drive unit for a safety system of a vehicle
Unité d'entraînement pour un système de sécurité d'un véhicule

(43) Veröffentlichungstag der Anmeldung: 23.04.2014
(73) Patentinhaber: Metalsa Automotive GmbH, 51702 Bergneustadt (DE)
(72) Erfinder: Kern, Alexander, 51597 Morsbach (DE)

(56) Entgegenhaltungen:
- DE-A1- 2 814 487
- DE-A1- 3 606 021
- DE-A1- 19 614 997
- DE-A1- 19 757 641
- DE-U1- 29 609 691
- GB-A- 2 314 755

## Beschreibung

Die Erfindung betrifft eine Antriebseinheit für ein Sicherheitssystem eines Fahrzeugs gemäß Oberbegriff des Anspruchs 1, vgl. DE 29609691 U1, sowie ein solches Sicherheitssystem.

Im Fahrzeugbau, insbesondere in Kfz-Bereich, sind verschiedene Sicherheitssysteme bekannt, bei denen im Falle eines Unfalls oder einer Gefahrensituation ein Antrieb auf eine Fahrzeugkomponente einwirkt, um die Sicherheit für die Fahrzeuginsassen zu erhöhen. Hierunter fallen insbesondere Gurtstraffer, bei denen über einen Antrieb der Rückhaltegurt des Fahrers bzw. Beifahrers durch Aufwickeln gestrafft wird, wodurch ein verbesserter Rückhalt für den Insassen gegeben ist. Hierbei sind im Stand der Technik zum einen elektrische Antriebe bekannt, mittels derer es allerdings schwierig ist, ein hinreichendes Drehmoment bei geringer Baugröße aufzubringen. Daneben sind pyrotechnische Antriebe bekannt, die beispielsweise zur Unterstützung ("Boosten") eines Elektroantriebs in Gefahren- oder Unfallsituationen eingesetzt werden. Hierunter fallen Systeme mit Kolben, bei denen die Kolbenbewegung auf einer Zahnstange übertragen wird, die wiederum mit einem Zahnrad zusammenwirkt, durch dessen Drehung der Gurt aufgewickelt wird. Die Flexibilität dieser Systeme ist durch den zumeist geringen Hub des Kolbens begrenzt. Ein weiterer Nachteil besteht in den Reibungsverlusten bei der Umsetzung der linearen Bewegung in eine Drehbewegung. Daneben sind Systeme bekannt, bei denen eine Reihe von Stahlkugeln mittels Gasdruck angetrieben werden, die wiederum ein Flügelrad antreiben, dessen Drehung das Aufwickeln des Gurtes bewirkt. Auch hierbei treten Reibungsverluste auf, zudem zwingen die Forderung nach einem ausreichenden Beschleunigungsweg für die Kugeln einerseits und einer geringen Baugröße andererseits zu Kompromissen.

Vor diesem Hintergrund ist es Aufgabe der vorliegenden Erfindung, ein effizientes System zum Antrieb eines Sicherheitssystems eines Fahrzeugs, insbesondere eines Gurtstraffers oder eines Sitzverstellers, bereitzustellen.

Die Aufgabe wird erfindungsgemäß gelöst durch eine Antriebseinheit nach Anspruch 1 sowie durch ein Sicherheitssystem nach Anspruch 12.

Die erfindungsgemäße Antriebseinheit für ein Sicherheitssystem eines Fahrzeugs umfasst wenigstens einen pyrotechnischen Antrieb. Wie bereits eingangs erläutert, bezeichnet "Sicherheitssystem" hierbei ein solches System, das im Falle eines Unfalls oder einer Gefahrensituation dafür sorgt, dass wenigstens eine Fahrzeugkomponente bewegt wird, um die Sicherheit für Fahrzeuginsassen zu erhöhen, insbesondere um ein Verletzungsrisiko für diese herabzusetzen. Dies bezieht sich insbesondere auf Gurtstraffer oder Sitzversteller, wobei der pyrotechnische Antrieb in Unfall- oder Gefahrensituationen einen Elektromotor unterstützen kann, daneben sind aber auch weitere Systeme denkbar, bei denen beispielsweise ein Fahrzeugsitz, eine Konsole, ein Bedienelement oder Teile hiervon bewegt werden.

Der genannte pyrotechnische Antrieb weist eine in einem Gehäuse ausgebildete Antriebskammer mit einer Austrittsöffnung für Gas auf. Das Gehäuse umschließt hierbei wenigstens die genannte Antriebskammer, kann aber ggf. auch weitere Teile des pyrotechnischen Antriebs umschließen. Abgesehen von der genannten Austrittsöffnung, die dazu ausgelegt ist, dass beim Betrieb durch sie Gas entweicht, - sowie von einer optional vorhandenen Öffnung, durch die Gas einströmt, welche weiter unten diskutiert wird - ist die Antriebskammer bevorzugt gasdicht aufgebaut. Als Materialien für die Konstruktion des Gehäuses bzw. der Kammerwandung kommen verschiedene Materialien, insbesondere Metalle wie Stahl oder hochfeste faserverstärkte Kunststoffe, infrage. Die Kammer kann allerdings innenseitig beispielsweise mit Kunststoff beschichtet sein, um eine geringere Reibung zu gewährleisten. In der Antriebskammer ist ein Rotor angeordnet, der axial drehbar gelagert ist. Der Begriff "axial" ist hierbei nicht dahingehend auszulegen, dass der Rotor oder die Antriebskammer zwangsläufig eine bestimmte (axiale) Symmetrie aufweisen. Vielmehr wird durch die Richtung der Drehachse des Rotors die axiale Richtung festgelegt, wodurch auch die Richtungen "tangential" und "radial" definiert sind.

Des Weiteren weist der pyrotechnische Antrieb einen pyrotechnischen Gasgenerator auf. Es können hierbei Gasgeneratoren eingesetzt werden, die im Stand der Technik bereits bekannt sind und z.B. im Zusammenwirken mit Kolben oder Stahlkugeln wie geschildert eingesetzt werden. Im Allgemeinen bezeichnet "pyrotechnischer Gasgenerator" hierbei allerdings jede Vorrichtung, in der gezielt eine chemische Reaktion auslösbar ist, die zur Gasentwicklung führt, typischerweise in Form einer Explosion oder eines gezielten Abbrands. In Kombination hiermit können auch Kartuschen mit vorgespanntem Gas verwendete werden, bei denen z.B. ein pyrotechnischer Gasgenerator eine Berstscheibe zerstört und damit den Zustrom von Gas aus der Kartusche zur Antriebseinheit freigibt. Der Gasgenerator dient zum Beaufschlagen des Rotors mit Gasdruck, wodurch der Rotor antreibbar ist. Der Rotor wird hierbei also unmittelbar mit Gasdruck beaufschlagt und dadurch in Drehbewegung versetzt. Es gibt also im Gegensatz zum Stand der Technik keine zwischengeschalteten Elemente, durch die die Drehbewegung erzeugt wird. Hierdurch können zum einen Reibungsverluste minimiert werden, zum anderen ist eine geringere Baugröße möglich. Es ist hierbei also vorgesehen, dass durch ein Auslösen des Gasgenerators ein Gasdruck aufgebaut wird, durch den der Rotor in Drehung versetzt wird, wobei das Gas schließlich durch die Austrittsöffnung entweichen kann. Es können auch mehrere Austrittsöffnung vorhanden sein bzw. die Austrittsöffnung kann Unterteilungen aufweisen. Überhaupt ist im Zusammenhang mit der vorliegenden Erfindung die Angabe "ein(e)", sofern nicht anders angegeben, als "wenigstens ein(e)" zu verstehen.

Ein weiterer Vorteil gegenüber bestimmten im Stand der Technik bekannten Lösungen besteht darin, dass die Drehbewegung des Rotors antriebsseitig nur durch die zur Verfügung stehende Gasmenge begrenzt ist, d.h. solange Gasdruck vorhanden ist, kann der Rotor eine Vielzahl von Umdrehungen ausführen. Diese können, falls notwendig, durch eine entsprechende Untersetzung extern reduziert werden. Durch den Einsatz o. g. Gaskartuschen kann die Nutzungsdauer bei Bedarf verlängert werden.

Wenngleich es denkbar ist, den Gasgenerator unmittelbar in der Antriebskammer anzuordnen, ist es bevorzugt, dass der Gasgenerator an einer Druckkammer angeordnet ist, die mit der Antriebskammer über einen Verbindungskanal verbunden ist, welcher gegenüber der Druckkammer verjüngt ist. Die Anordnung des Gasgenerators ist hierbei derart gewählt, dass freigesetztes Gas zunächst in die genannte Druckkammer strömt. Dies schließt selbstverständlich Bauformen ein, bei denen der Gasgenerator in der genannten Druckkammer angeordnet ist. Er kann aber auch z.B. in eine Wandung der Druckkammer eingelassen sein. Durch den Verbindungskanal strömt das Gas weiter in die Antriebskammer. Hierbei erfüllt der Verbindungskanal zwei Funktionen. Zum einen wird dadurch, dass er gegenüber der Druckkammer verjüngt ist, ein kleinerer Zugangsweg für das Gas geschaffen, wodurch dieses über einen längeren Zeitraum in die Druckkammer strömen kann. Zum anderen ist es durch den Verbindungskanal möglich, das Gas gezielt in einen bestimmten Teil der Antriebskammer zu leiten, wo eine optimale Einwirkung auf den Rotor erfolgt. Eine maximale Querabmessung (z.B. ein Durchmesser) des Verbindungskanals kann hierbei bevorzugt zwischen 1% und 90%, weiter bevorzugt zwischen 5% und 70%, besonders bevorzugt zwischen 10% und 30% einer maximalen Abmessung der Druckkammer betragen. Sowohl die Druckkammer als auch der Verbindungskanal müssen hierbei selbstverständlich stabil genug sein, um den auftretenden Gasdrücken zu widerstehen, weshalb sie beispielsweise innerhalb eines Metallkörpers ausgebildet sein können. Die Dimensionierung der Druckkammer ist vorteilhaft vergleichsweise groß; ihr Volumen kann beispielsweise das 0,5-fache bis 500-fache, bevorzugt das 10-fache bis 100-fache des Volumens der Antriebskammer betragen. Bei Einsatz einer Gaskartusche ist hierbei deren Volumen dem der Druckkammer hinzuzurechnen.

Gemäß einer Ausgestaltung der Erfindung ist der Rotor nach Art eines Lamellenmotors ausgebildet. Solche Motoren sind im Stand der Technik bekannt, insbesondere in Verbindung mit Druckluft als Antriebsmittel. Bei einer typischen Bauform weist hierbei der Rotor einen im Wesentlichen zylindrischen Lamellenträger auf, der mit radial verlaufenden Schlitzen versehen ist, in die Lamellen gesteckt sind. Die Antriebskammer ist ebenfalls zylindrisch ausgebildet, allerdings exzentrisch zum Rotor, so dass dieser an einer Seite nahezu die Wandung der Kammer berührt, während an der gegenüberliegenden Seite ein größerer Abstand besteht. An letzterer Seite befindet sich typischerweise die Austrittsöffnung, während das erzeugte Gas zunächst dem Teil zugeleitet wird, in dem der Abstand zwischen Rotor und Wandung gering ist. Die Lamellen sorgen für eine Abdichtung zwischen Rotor und Wandung, wobei sie typischerweise durch Fliehkräfte nach außen gedrückt werden, wodurch ein zumindest überwiegend gasdichter Abschluss gewährleistet ist. Die Bewegung der Lamellen nach außen kann - insbesondere in der Anfangsphase - unterstützt werden, indem Gas in die Schlitze innenseitig der Lamellen geführt wird und die Lamellen so mit Gasdruck beaufschlagt werden.

In einer alternativen Ausgestaltung ist der Rotor als Flügelrad ausgebildet. Hierbei kann das Flügelrad aus einem einzigen Stück bestehen, z.B. aus einem Metallblech. Es sind zum einen Bauformen denkbar, bei denen das Flügelrad in Richtung seiner Rotationsachse vom Gas angeströmt wird. Dies kann insbesondere bei axialer Anordnung des Gasgenerators und/oder der Druckkammer der Fall sein. Daneben sind auch Bauformen möglich, bei denen das Flügelrad tangential, also senkrecht zur Drehachse, angeströmt wird. Dies ist insbesondere bei radialer Anordnung des Gasgenerators und/oder der Druckkammer denkbar.

Wie bereits dargestellt, ermöglicht die erfindungsgemäße Antriebseinheit eine geringe Baugröße, wodurch sie flexibel einsetzbar ist. Diese Flexibilität lässt sich weiter erhöhen, indem der Gasgenerator und/oder die Druckkammer, sofern diese vorhanden ist, in unterschiedlicher Weise bezüglich des Rotors angeordnet werden. So ist es zum einen denkbar, dass eines der genannten Elemente oder beide axial bezüglich des Rotors angeordnet sind. Hierdurch ergibt sich in Bezug auf die axiale Richtung eine schlanke Bauform.

Daneben ist es für bestimmte Anwendungen auch sinnvoll, dass der Gasgenerator und/oder die Druckkammer radial bezüglich des Rotors angeordnet sind. Dies ist z.B. dann vorteilhaft, wenn eine Welle, auf die der Rotor einwirkt, durch den pyrotechnischen Antrieb hindurchgeführt werden soll, was bei einer axialen Anordnung kaum möglich ist. Des Weiteren ist diese Anordnung vorteilhaft, wenn bezogen auf die axiale Richtung keine schlanke, sondern eine flache Bauform gewünscht ist.

Falls eine Druckkammer vorhanden ist, an welcher der Gasgenerator angeordnet ist, entspricht die axiale bzw. radiale Anordnung bezüglich des Rotors einer axialen bzw. radialen Anordnung bezüglich der Antriebskammer. In jedem der genannten Fälle ist es bei Vorhandensein eines Verbindungskanals möglich, das austretende Gas denjenigen Teil der Antriebskammer zuzuleiten, in dem eine optimale Beaufschlagung des Rotors erfolgt. Besonders vorteilhaft ist jeweils der Gasgenerator an dem der Antriebskammer bzw. dem Rotor gegenüberliegenden Ende der Druckkammer angeordnet.

Da in der Praxis ein Unfall, der den Einsatz des Sicherheitssystems bedingt, oftmals nicht mit einem Totalschaden des betreffenden Fahrzeugs endet, ist es wünschenswert, eine einfache Wiederverwendbarkeit der Antriebseinheit vorzusehen. Hierbei reicht es in der Regel, den Gasgenerator zu ersetzen, da beim Betrieb die weiteren Bauteile normalerweise allenfalls Gasdruck ausgesetzt sind und somit unbeschädigt bleiben. Daher ist gemäß einer bevorzugten Ausführungsform vorgesehen, dass der Gasgenerator lösbar mit dem Rest des pyrotechnischen Antriebs verbunden ist. Dies kann durch verschiedene Verbindungsarten, die im Stand der Technik bekannt sind, erreicht werden, so z.B. durch Schnappverbindungen oder Schraubverbindungen. Besonders bevorzugt kann hierbei vorgesehen sein, dass der Gasgenerator mit einem Gehäuseteil, der einen Teil der Wandung der Druckkammer bildet, lösbar verbunden ist, und dass dieser Gehäuseteil seinerseits lösbar mit dem Rest des Gehäuses verbunden ist. Hierfür kann insbesondere eine Verbindung mittels eines Bajonettverschlusses vorgesehen sein.

Gemäß der Erfindung umfasst die Antriebseinheit einen zweiten Antrieb. Dies kann zum einen bedeuten, dass ein weiterer pyrotechnischer Antrieb vorgesehen ist, der gleichzeitig oder z.B. zeitlich gestaffelt mit dem pyrotechnischen Antrieb zum Einsatz kommt. Zum anderen kann es sich aber um eine andere Antriebsart, wie z.B. einen elektrischen Antrieb, handeln. Die andere Antriebsart kommt normalerweise außerhalb einer Unfallsituation zum Einsatz. Ein Beispiel hierfür wäre ein im Stand der Technik bekannter reversibler Gurtstraffer, der mittels eines elektrischen Antriebes in Gefahrensituationen mit einer geringeren Kraft auf den Gurt einwirkt.

Nach der Erfindung sind der pyrotechnische Antrieb und der zweite Antrieb axial zueinander angeordnet sein und wirken auf dieselbe Welle ein. Auch dieses ist eine typische Situation bei einem Gurtstraffer, der einen elektrischen und einen pyrotechnischen Antrieb umfasst.

Ein spezielles Problem ergibt sich, wenn der zweite Antrieb einen Elektromotor umfasst, insbesondere z.B. dann, wenn beide Antriebe auf dieselbe Welle einwirken. Sind die Antriebe in dieser oder in anderer Weise mechanisch aneinander gekoppelt, kann es aufgrund der starken Winkelbeschleunigung durch den pyrotechnischen Antrieb zu Überspannung kommen, wobei der Elektromotor als Generator wirkt. Die Überspannung kann beispielsweise dazu führen, dass die Elektronik des Elektromotors zerstört wird. Um dies zu verhindern, ist in einer bevorzugten Ausgestaltung der Erfindung der pyrotechnische Antrieb dazu ausgebildet, bei Inbetriebnahme einen Schutzschalter des Elektromotors auszulösen. Durch diese Maßnahme können elektronische Bauteile vor auftretenden Spannungsspitzen effektiv geschützt werden. Als Schutzschalter dienen in diesem Zusammenhang insbesondere solche Schalter, durch die ein Stromkreis des Elektromotors getrennt wird und/oder durch die ein alternativer Stromkreis geschlossen wird, um z.B. die Steuerelektronik zu schützen. Hierbei beinhaltet die Formulierung "bei Inbetriebnahme" ausdrücklich auch solche Ausführungsformen, bei denen die Unterbrechung des Stromkreises nicht gleichzeitig mit der Inbetriebnahme (also insbesondere mit dem Auslösen des Gasgenerators) erfolgt, sondern mit einer gewissen Verzögerung; diese kann sich z.B. aufgrund der Trägheit von Bauteilen ergeben, liegt allerdings bevorzugt unter 10 ms, weiter bevorzugt unter 5 ms, besonders bevorzugt unter 2 ms.

Es ist alternativ zwar denkbar, einen entsprechenden Schutzschalter durch eine übergeordnete Steuerung auszulösen, allerdings ist die direkte Auslösung durch den pyrotechnischen Antrieb besonders wenig störanfällig und ermöglicht einen flexibleren Einsatz ohne die Notwendigkeit zusätzlicher externer Steuerleitungen.

Eine besonders effektive Art, die oben genannte Schutzmaßnahme zu verwirklichen, besteht darin, dass wenigstens ein Teil des pyrotechnischen Antriebs durch Beaufschlagen mit Gasdruck axial und/oder radial verschiebbar ist, wodurch der Schutzschalter ausgelöst wird. Bevorzugt umfasst die Antriebseinheit hierbei ein Rückstellelement zum Rückführen des pyrotechnische Antriebs oder eines Teils desselben in eine Ausgangsposition nach einem Abfallen des Gasdrucks. Hierbei kann die Verschiebung insbesondere entgegen einer Federkraft erfolgen, so dass nach Abbau des Gasdrucks der verschobene Teil des pyrotechnischen Antriebs in seine Ausgangsposition zurückkehrt. Der genannte Teil des Antriebs kann z.B. ein Teil des Gehäuses sein und/oder der Rotor selbst kann zusätzlich zu seiner tangentialen Bewegung eine axiale Verschiebung erfahren. Besonders bevorzugt ist hierbei ein Gehäuse des pyrotechnischen Antriebs wenigstens teilweise in ein stationäres Außengehäuse sowie ein axial verschiebliches Innengehäuse unterteilt. Der sich verschiebende Teil des pyrotechnischen Antriebs kann mit einem Druckschalter zusammenwirken, der für die Unterbrechung des Stromkreises sorgt. Im einfachsten Fall kann auch ein Federelement, entgegen dessen Kraft die Verschiebung erfolgt, einen Teil des Stromkreises bilden. Hierbei erfolgt die Unterbrechung des Stromkreises durch die Verformung des Federelements.

Wie bereits dargestellt wurde, kann die durch den Rotor erzeugte Drehbewegung beispielsweise bei einem Gurtstraffer unmittelbar benutzt werden. Für bestimmte Anwendungen kann aber auch eine Umwandlung der Bewegung vorgesehen werden. Daher umfasst die Antriebseinheit gemäß einer Ausgestaltung der Erfindung ein Getriebe, mit dem wenigstens ein Antrieb zusammenwirkt. Hierbei kann zum einen über eine Kombination von Zahnrädern eine Über- oder Untersetzung erfolgen, es ist aber auch eine Umsetzung in eine lineare Bewegung mittels einer Zahnstange oder ähnlichem denkbar. Auch kann ein Getriebe eine Kombination von zusammenwirkendem Innen- und Außengewinde umfassen, wodurch die Drehbewegung des Rotors in eine lineare Bewegung umgewandelt werden kann. Zwar können durch den Einsatz eines Getriebes wiederum Reibungsverluste auftreten, allerdings ist auch hier der Vorteil gegeben, dass die Bewegung des Rotors antriebsseitig nur durch die zur Verfügung stehende Gasmenge begrenzt ist, nicht jedoch durch den Weg eines Kolben oder die Anzahl zur Verfügung stehender Stahlkugeln. Somit kann z.B. antriebsseitig eine Vielzahl von Umdrehungen erfolgen, die durch eine Untersetzung in eine geringere Umdrehungszahl gewandelt werden, wobei sich allerdings gleichzeitig ein entsprechend höheres Drehmoment ergibt. Wirken zwei Antriebe auf ein Getriebe ein, so können diese beispielsweise unmittelbar über ein und dieselbe Welle einwirken oder aber separat an das Getriebe gekoppelt sein, z.B. über zwei getrennte Wellen. Es kann auch eine Ankopplung mit einer zwischengeschalteten Kupplung (z.B. Fliehkraftkupplung) zur Abkopplung von anderen Bauteilen vorgesehen sein, um eine Beschädigung derselben zu vermeiden. So kann hierdurch z.B. ein Elektromotor auch vor Überspannungen durch Induktion geschützt werden.

Die Betriebsparameter des pyrotechnischen Antriebs, insbesondere Drehzahl und Drehmoment, werden durch verschiedene Größen beeinflusst. Hierunter fallen z.B. die vom Gasgenerator freigesetzte Energie und die Dimensionierung von Druckkammer, Verbindungskanal und Rotor. Auch durch die Auslegung des Durchströmquerschnittes zwischen Druckkammer und Lamellenantrieb können die Drehzahl oder ein externes Lastmoment eingestellt werden. Allerdings kann es bei bestimmten Anwendungen sinnvoll sein, den Antrieb gewissermaßen "künstlich" mit einem zusätzlichen Trägheitsmoment zu belasten, wodurch sich dessen Dynamik ebenfalls beeinflussen lässt. Daher umfasst die Antriebseinheit in einer weiteren Ausführungsform ein mit dem pyrotechnischen Antrieb verbundenes Trägheitselement. Ein solches Trägheitselement ist - typischerweise über eine Welle - an den Rotor gekoppelt und hat keine weitere Funktionen außer ein zusätzliches Trägheitsmoment bereitzustellen. Da hierbei ein Material mit hoher Dichte vorteilhaft ist, kann ein solches Trägheitselement insbesondere aus Metall bestehen.

Gemäß einer Weiterbildung der Erfindung umfasst die Antriebseinheit ein Entriegelungselement, wobei der Gasgenerator dazu ausgebildet ist, auf das Entriegelungselement einzuwirken, um eine Bewegung der Antriebseinheit freizugeben. Ein solches Entriegelungselement kann entweder direkt mit einem Antrieb (z.B. mit dem Rotor), mit einem Getriebe oder sogar mit einer zu bewegenden Fahrzeugkomponente zusammenwirken, um diese zu arretieren. Es kann hierdurch z.B. eine erhöhte Stabilität erreicht werden, solange der pyrotechnische Antrieb nicht ausgelöst wird. In jedem Fall wird die Bewegung der Fahrzeugkomponente durch die Antriebseinheit ver- oder behindert, solange das Entriegelungselement in verriegeltem Zustand ist. Durch die Einwirkung des Gasgenerators erfolgt ein Entriegeln. Der Gasgenerator kann hierbei ggf. das Entriegelungselement selbst mit Gasdruck beaufschlagen oder aber ein mechanisches zwischengeschaltetes Element (z.B. eine Kolben), das seinerseits mechanisch auf das Entriegelungeselement einwirkt. Hierbei kann insbesondere vorgesehen sein, dass erst nach einem Entriegelungsvorgang der Rotor mit Gasdruck beaufschlagt wird.

Durch die Erfindung wird des Weiteren ein Sicherheitssystem für ein Fahrzeug bereitgestellt. Dieses Sicherheitssystem umfasst eine erfindungsgemäße Antriebseinheit sowie eine Fahrzeugkomponente, wobei die Antriebseinheit dazu ausgebildet ist, bei einem Unfall oder einer Gefahrensituation die Fahrzeugkomponente zu bewegen, um ein Verletzungsrisiko für Insassen zu verringern. Als Fahrzeuge kommen hier insbesondere Kraftfahrzeuge wie Pkw oder Lkw in Frage. Die Fahrzeugkomponente kann hierbei insbesondere ein Aufwickler eines Sicherheitsgurtes sein. Daneben kann es sich aber auch, wie bereits erwähnt, um einen Fahrzeugsitz, eine Konsole, ein Bedienelement, Teile hiervon oder anderes handeln.

Details der Erfindungen werden im Folgenden anhand von Ausführungsbeispielen mit Bezug auf die Figuren erläutert. Hierbei zeigt
- Fig.1: eine perspektivische Darstellung einer ersten Ausführungsform einer erfindungsgemäßen Antriebseinheit;
- Fig.2: eine Schnittdarstellung der Antriebseinheit aus Fig.1;
- Fig.3: eine perspektivische Darstellung einer zweiten Ausführungsform einer erfindungsgemäßen Antriebseinheit;
- Fig.4: eine Schnittdarstellung der Antriebseinheit aus Fig.3;
- Fig.5: eine Schnittdarstellung gemäß der Linie A-A aus Fig.4;
- Fig.6: eine perspektivische Darstellung eines Gehäuseteils der Antriebseinheit aus Fig.3 mit einem darin angeordneten Rotor;
- Fig.7: eine perspektivische Darstellung eines Gehäuseteils der Antriebseinheit aus Fig.3 mit Elementen eines Schutzschalters;
- Fig.8: eine perspektivische Darstellung einer dritten Ausführungsform einer erfindungsgemäßen Antriebseinheit;
- Fig.9: eine perspektivische Darstellung des Rotors der Antriebseinheit aus Fig.8;
- Fig.10: eine Schnittdarstellung der Antriebseinheit aus Fig.8;

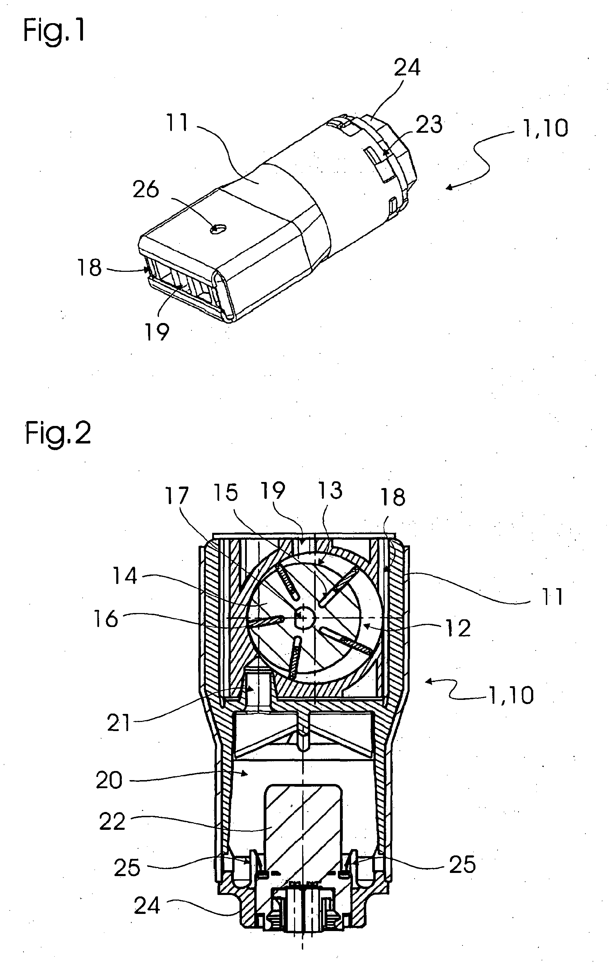

In Fig.1 ist eine erste Ausführungsform einer erfindungsgemäßen Antriebseinheit 1 dargestellt. Die dargestellte Antriebseinheit 1 besteht hierbei aus einem pyrotechnischen Antrieb 10. Dieser ist in einem Gehäuse 11 gekapselt, das eine Öffnung 26 für die Aufnahme einer Welle (nicht dargestellt) zur externen Kraftübertragung aufweist. Gegenüberliegend der Öffnung 26 befindet sich eine weitere, hier nicht dargestellte Öffnung, so dass die Welle vollständig durch das Gehäuse 11 hindurchgeführt werden kann. An einer Seite ist mittels eines Bajonettverschlusses 23 einen Verschlussdeckel 24 lösbar mit dem restlichen Gehäuse 11 verbunden. An einer dem Verschlussdeckel 24 gegenüberliegenden Seite des Gehäuses 11 sind eine erste und zweite Gasaustrittsöffnung 18, 19 erkennbar.

Der innere Aufbau des Antriebs 10 wird nunmehr mit Bezug auf die Schnittdarstellung in Fig.2 erläutert, wobei die Schnittebene senkrecht zur Drehachse der einzusetzenden Welle verläuft. In einem Teil des Antriebs 10 ist innerhalb des Gehäuses 11 eine Antriebskammer 12 ausgebildet, die eine im Wesentlichen zylindrische Form hat. Die Antriebskammer 12 kann hierbei insbesondere innerhalb eines Metallkörpers ausgebildet sein, wenngleich eine innenseitiger Beschichtung mit Kunststoff vorteilhaft sein kann, um Reibungsverluste zu minimieren. Innerhalb der Antriebskammer 12 ist ein Rotor 13 angeordnet. Dieser umfasst einen im wesentlichen zylindrischen Lamellenträger 14, der mit dem etwa radial verlaufenden Schlitzen 15 versehen ist. In diese Schlitze 15 sind Lamellen 16 eingesetzt. Der Lamellenträger 14 weist außerdem eine zentral angeordnete Ausnehmung 17 zur Aufnahme einer Welle auf. Hierüber ist eine axiale Richtung einer Drehachse des Rotors 13 definiert.

Vorliegend arbeitet der Antrieb 10 nach dem Prinzip eines Lamellenmotors. Hierbei ist, wie aus Fig.2 hervorgeht, der Rotor 13 bezüglich der Antriebskammer 12 exzentrisch angeordnet. Somit ergibt sich in einem an die erste Austrittsöffnung 18 angrenzenden Bereich ein großer Abstand zwischen Lamellenträger 14 und der Wandung der Antriebskammer 12, während an einem gegenüberliegenden Ende sich die genannten Teile nahezu berühren. In jenem Bereich mündet ein Verbindungskanal 21 in die Antriebskammer 12.

Über diesen Verbindungskanal 21 steht die Antriebskammer 12 mit einer Druckkammer 20 in Verbindung. Im vorliegenden Fall sind sowohl der Verbindungskanal 21 als auch die Druckkammer 20 im wesentlichen zylindrisch aufgebaut, wobei allerdings die Querabmessung des Verbindungskanals 21 nur ungefähr ein Fünftel derjenigen der Druckkammer 20 beträgt. Der Verschlussdeckel 24 bildet hierbei einen stirnseitigen Abschluss der Druckkammer 20. Innerhalb der Druckkammer 20 ist ein Mikrogasgenerator 22 angeordnet, der über einen Schnappverschluss 25 mit dem Verschlussdeckel 24 verbunden ist. Darüber hinaus ist ein zweiter, kleinerer Verbindungskanal (nicht dargestellt) vorhanden, der die Druckkammer 20 mit einem Teil der Antriebskammer 12 verbindet, der an die (in radialer Richtung) inneren Enden der Schlitze 15 des Rotors 13 angrenzt. Hierüber können diese Bereiche mit Gasdruck beaufschlagt werden, um die Lamellen 16 aktiv nach außen zu drücken.

Der Mikrogasgenerator 22 kann in bekannter Weise elektrisch gezündet werden, z.B. über die Airbagsteuerung eines Fahrzeugs. Geschieht dies, so baut sich aufgrund der Gasentwicklung innerhalb der Druckkammer 20 ein hoher Gasdruck auf. Die entstehende Druckwelle erreicht über den Verbindungskanal 21 die Arbeitskammer 12 und beginnt auf dem Weg zu den Austrittsöffnungen 18,19 den Rotor 13 anzutreiben. Nach einer kurzen Anlaufphase, die im Bereich von wenigen Millisekunden, typischerweise sogar unter 1 Millisekunde, liegt, werden hierbei aufgrund der Fliehkräfte sowie durch den Druck des über den zweiten Verbindungskanal hinter die Lamellen 16 geführten Gases die Lamellen 16 in den Schlitzen 15 nach außen zur Wandung der Antriebskammer 12 gedrückt, wodurch ein im wesentlichen gasdichter Abschluss entsteht. Dieser Zustand ist in Fig.2 bereits dargestellt. Die sich ergebende Drehbewegung des Rotors 13 lässt sich über eine Welle auf ein Fahrzeugelement, z.B. einen Gurtaufwickler, übertragen. Der pyrotechnische Antrieb 10 ermöglicht hierbei eine sehr schnelle Bereitstellung hoher Drehmomente.

Bei dem in Fig.1 und 2 dargestellten Antrieb 10 sind die Druckkammer 20 sowie der Mikrogasgenerator 22 radial bezüglich des Rotors 13 angeordnet. Hierdurch ist zum einen das Hindurchführen einer Welle durch den Antrieb 10 möglich, zum anderen ergibt sich bezüglich der axialen Richtung eine sehr flache Bauform.

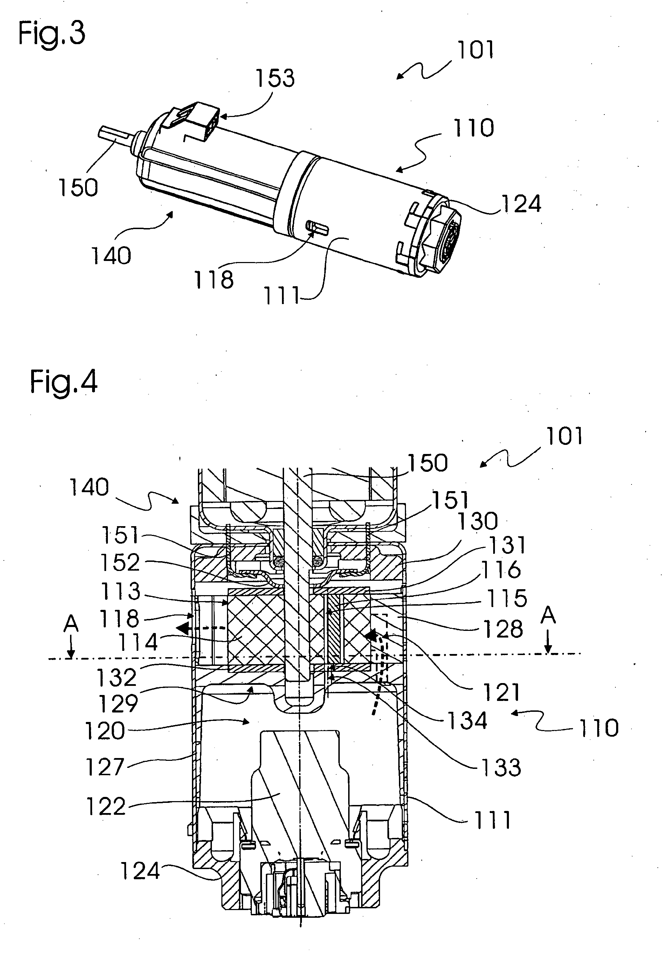

Fig.3-5 zeigen eine alternative Ausführungsform einer Antriebseinheit 101. Wie in Fig.3 erkennbar, die eine perspektivische Darstellung zeigt, umfasst diese neben einem pyrotechnischen Antrieb 110 auch einen Gleichstrommotor 140, der seitlich eine Anschlussbuchse 153 zur Stromversorgung aufweist. Die genannten Antriebe 110, 140 wirken hierbei unmittelbar auf die gleichen Welle 150 ein. Ein typisches Anwendungsbeispiel für eine solche Konfiguration ist ein Gurtstraffer, bei dem der Gleichstrommotor 140 einen reversiblen Antrieb für potentielle Gefahrensituationen darstellt, während der pyrotechnische Antrieb 110 für Unfallsituationen vorgesehen ist. Die beiden Antriebe 110,140 sind bei dieser Ausführungsform axial zueinander angeordnet, wobei die gesamte Antriebseinheit 101 eine langgestreckte, in etwa zylindrische Form aufweist.

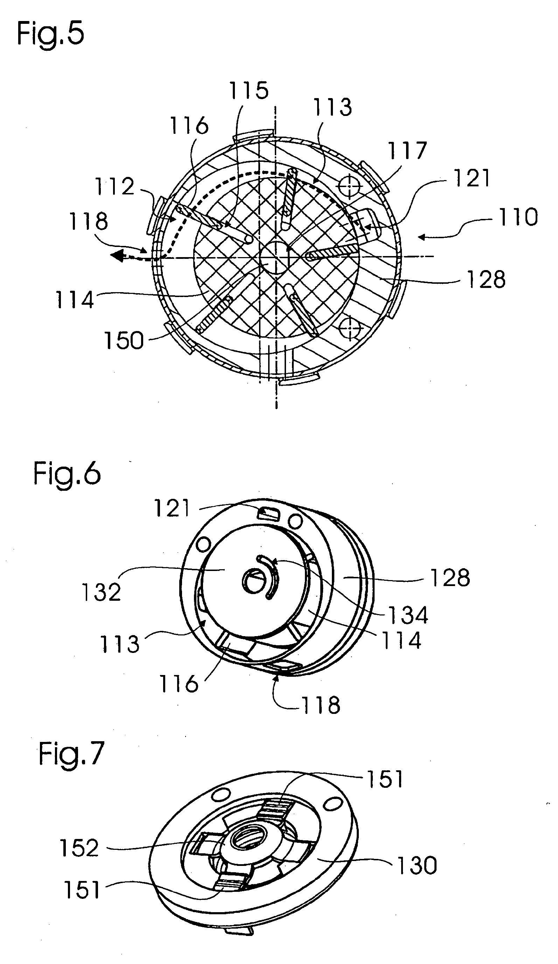

Wie aus den Schnittdarstellungen gemäß Fig.4 und 5 hervorgeht, ist ein Rotor 113 des pyrotechnischen Antriebs 110 mit einer zentralen Ausnehmung 117 auf die Welle 150 aufgesteckt und hierbei mit dieser zusammen um eine axiale Richtung drehbar. Auch hier ist der Rotor 113 wiederum als Lamellenträger 114 mit in Schlitze 115 eingesteckten Lamellen 116 ausgebildet. Er ist in gleicher Weise wie bei dem in Fig. und 2 gezeigten Ausführungsbeispiel exzentrisch in einer im wesentlichen zylindrischen Antriebskammer 112 angeordnet, die radial nach außen durch ein Auslassgehäuse 128 begrenzt ist. Im Gegensatz zu jenem Ausführungsbeispiel ist bei den hier gezeigten Antrieb 110 eine Druckkammer 120 mit einem darin angeordneten Mikrogasgenerator 122 nicht radial, sondern axial zum Rotor 113 angeordnet. Hierdurch erhält der gesamte Antrieb 110 eine vergleichsweise schlanke, insgesamt etwa zylindrische Form. Die Druckkammer 120 ist radial nach außen sowie in Richtung auf die Antriebskammer 112 durch ein Druckgehäuse 127 begrenzt. Das Druckgehäuse 127 sowie das axial angrenzende Auslassgehäuse 128 sind axial verschieblich innerhalb eines äußeren Mantelgehäuses 111 angeordnet. Auch der Rotor 113 ist zwar drehfest, aber axial verschieblich mit der Welle 150 verbunden. An seinen Stirnseiten sind am Rotor 113 ein erstes Abschlusselement 131 sowie - in Richtung auf die Druckkammer 120 - ein zweites Abschlusselement 132 angeordnet, welche jeweils scheibenförmig ausgestaltet sind und dem Durchmesser des Lamellenträgers 114 entsprechen. Sie sind allerdings nicht drehfest mit der Welle 150 verbunden und drehen nicht mit dem Rotor 113 mit. Auch sie sind axial verschieblich.

Aufbau und Funktionsweise von Druckkammer 120 und Mikrogasgenerator 122 sind hier im Wesentlichen identisch zu dem bereits diskutierten Ausführungsbeispiel. Allerdings unterscheiden sich in diesem Fall Anordnung und Form eines das Druckgehäuse 127 sowie das Auslassgehäuse 128 durchlaufenden Verbindungskanals 121, der die Druckkammer 120 sowie die Antriebskammer 112 verbindet. Der Verbindungskanal 121 führt zunächst axial von der Druckkammer in Richtung der Antriebskammer 112 und dann von außen nach innen in radialer Richtung in die Antriebskammer 112 hinein. Durch Pfeile mit gestrichelten Linien ist in Fig.4 und 5 der Weg des vom Mikrogasgenerator 122 erzeugten Gases angedeutet, dieses strömt durch den Verbindungskanal 121 in die Antriebskammer 112, versetzt den Rotor 113 in Drehbewegung und strömt schließlich durch eine Austrittsöffnungen 118 aus.

Wie bereits beim vorigen Ausführungsbeispiel erwähnt, wird das Ausfahren der Lamellen 116 auch bei dem hier dargestellten Antrieb 110 durch Gasdruck unterstützt. Zu diesem Zweck führt ein Durchlasskanal 133 sehr geringen Querschnitts von der Druckkammer bis zum zweiten Abschlusselement 132. Wie aus Fig.6 ersichtlich ist, die eine perspektivische Ansicht des Druckgehäuses 127 mit dem Rotor 113 sowie dem zweiten Abschlusselement 132 zeigt, weist das zweite Abschlusselement 132 eine Durchlassöffnung 134 auf, die im eingebauten Zustand an den Durchlasskanal 133 angrenzt. Durch den Durchlasskanal 133 und die Durchlassöffnung 134 kann ein innerer Bereich der Schlitze 115 mit Gasdruck beaufschlagt werden, um die Lamellen 116 nach außen zu drücken.

Da bei dieser gezeigten Antriebseinheit 101 der pyrotechnische Antrieb 110 und der Gleichstrommotor 140 über die Welle 150 mechanisch aneinander gekoppelt sind, könnten die beim Einsatz des pyrotechnischen Antriebs 110 auftretenden hohen Drehmomente und Drehzahlen zu Überspannungen im Elektromotor 140 führen. Hierdurch könnte eine (nicht dargestellte) Steuerelektronik des Gleichstrommotors 140 bzw. der Motor 140 selbst beschädigt oder zerstört werden. Um dies zu vermeiden, ist vorgesehen, dass beim Betrieb des pyrotechnischen Antriebs 110 der Stromkreis des Gleichstrommotors 140 unterbrochen wird. Hierzu sind zum einen zwei Kontakte 151, die einen Teil des Stromkreises bilden, in Richtung des pyrotechnischen Antriebs 110 aus dem Elektromotor 140 herausgeführt. Die Verbindung zwischen diesen Kontakten 151 wird im Normalfall durch eine Tellerfeder 152 hergestellt, die auf dem ersten Abschlusselement 131 aufliegt und drehfest in ein Widerlager 130 eingesetzt ist, das seinerseits mit dem Mantelgehäuse 111 verbunden ist. D.h. durch die Tellerfeder 152 ist der Stromkreis des Gleichstrommotors 140 geschlossen. Die Anordnung der kreuzartig ausgebildeten Tellerfeder 152 im Widerlager 130 ist in Fig.7 zu erkennen.

Die Unterbrechung des Stromkreises wird durch eine Verschiebung von Teilen des pyrotechnischen Antriebs 110 erreicht. Durch die axiale Verschieblichkeit des Druckgehäuses 127, des Auslassgehäuses 128, des Rotors 113 sowie der Abschlusselemente 131, 132 kann die Druckkammer 120 unter Druckbeaufschlagung einer der Antriebskammer 112 zugewandten Stirnseite 129 in geringem Maße expandieren. Hierbei erfolgt eine Kompression der Tellerfeder 152, wodurch zum einen eine Rückstellkraft gegeben ist, zum anderen eine Unterbrechung des Stromkreises erfolgt, da die Tellerfeder 152 nicht mehr mit den Kontakten 151 in Verbindung steht. Nach dem Abbau des Drucks in der Druckkammer, d.h. nachdem der Betrieb des pyrotechnischen Antriebs 110 beendet ist, werden die axial verschobene Elemente 113, 127, 128, 131, 132 wieder in ihre Ausgangsposition zurückgeschoben, wodurch der Stromkreis des Gleichstrommotors 140 wieder geschlossen wird.

Der hier gezeigte pyrotechnische Antrieb 110 weist einen Durchmesser von ca. 30 mm und eine Länge von ca. 53mm auf. Das Volumen der Druckkammer 120 beträgt hierbei ca. 12 cm³. Mit einer Ladung des Mikrogasgenerators 122 von 400 mg können hierbei innerhalb der ersten 50 ms ein mittleres Drehmoment von ca. 1,4 Nm sowie eine Drehzahl von 1380 U/s zur Verfügung gestellt werden. Die hier genannten Werte sind in keiner Weise einschränkend hinsichtlich der Erfindung auszulegen, sondern sollen lediglich illustrieren, dass bei sehr kleiner Bauform eine hohe Leistungsfähigkeit erreicht werden kann.

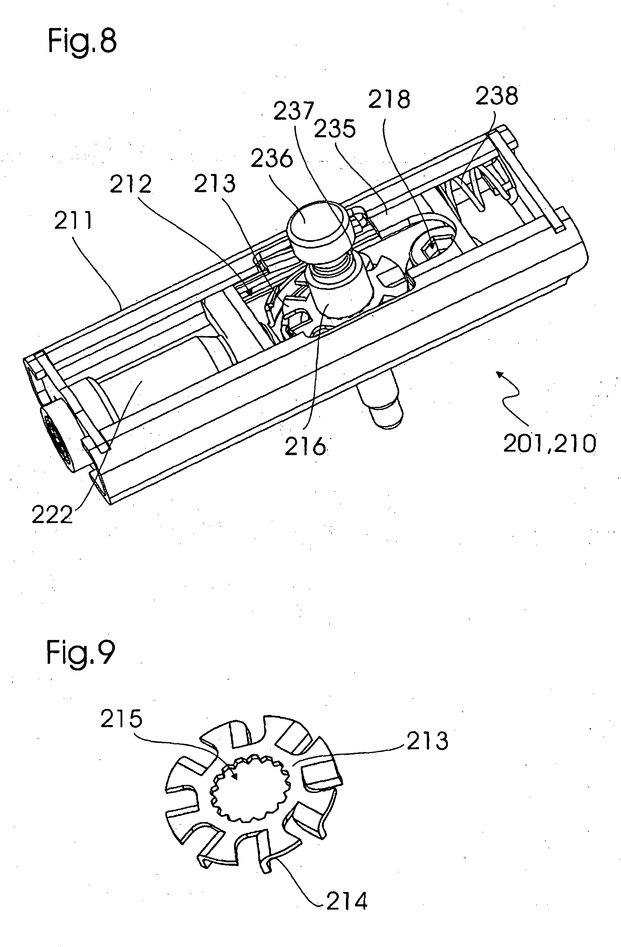

Fig.8 zeigt eine weitere Ausführungsform einer erfindungsgemäßen Antriebseinheit 201, die für einen Sitzversteller eines Kraftfahrzeugs vorgesehen ist. Die Antriebseinheit 201 weist wiederum nur einen pyrotechnischen Antrieb 210 auf. Dieser ist dazu vorgesehen, zwischen die Karosse und die Sitzschiene eines Kraftfahrzeugs (nicht dargestellt) eingebaut zu werden. Zur besseren Veranschaulichung der einzelnen Komponenten ist in Fig.8 ein Gehäuse 211 des Antriebs 210 nur teilweise dargestellt. Tatsächlich bildet dieses wie auch bei den bereits diskutierten Ausführungsbeispielen einen weitgehend gasdichten Mantel für eine Antriebskammer 212, in der ein Rotor 213 drehbar gelagert ist.

Wie insbesondere aus der perspektivischen Darstellung desselben in Fig.9 ersichtlich, ist der Rotor 213 hier als Flügelrad ausgestaltet. Dieses ist aus einer kreisscheibenförmigen Blechscheibe hergestellt, wobei Flügel 214 durch teilweises Ausstanzen und Umbiegen von äußeren Abschnitten der Kreisscheibe gebildet wurden. Der Rotor 213 weist eine zentrale Ausnehmung 215 mit gezähntem Rand auf. Mittels dieser Zähnung ist der Rotor 213 drehfest mit einem zylindrischen Manschettenelement 216 verbunden, das ein Innengewinde (nicht dargestellt) aufweist. Das Innengewinde wirkt mit einem Außengewinde 237 eines Hubbolzens 236 zusammen, der durch das Manschettenelement 216 sowie durch die zentrale Ausnehmung 215 des Rotors 213 hindurchgeführt ist. Der Hubbolzen 236 ist verdrehgesichert mit der Sitzschiene verbunden. Bei einer Drehung des Außengewindes erfolgt daher über das Innengewinde 237 eine axiale Verschiebung des Hubbolzens 236.

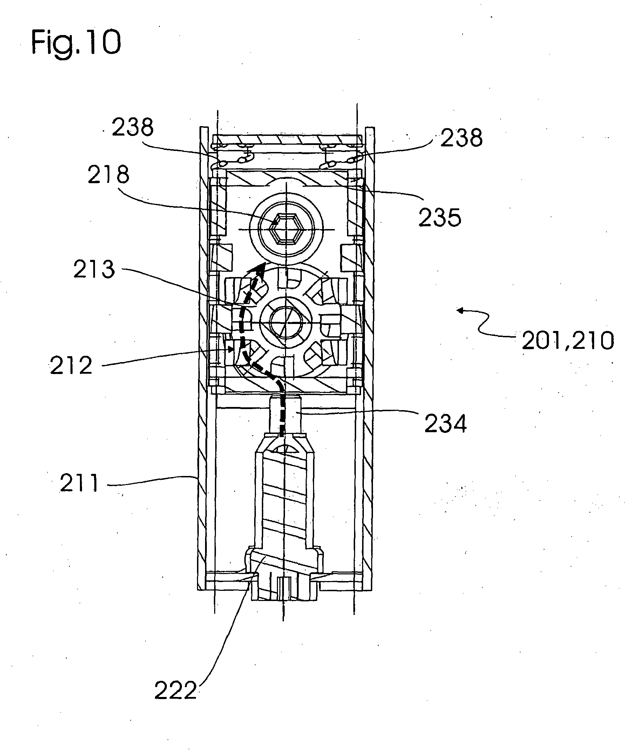

Bei dem in Fig.8 und 10 gezeigten Ausführungsbeispiel gibt es keine mit der Antriebskammer 212 verbundene Druckkammer, vielmehr ist ein Gasgenerator 222 unmittelbar radial zu dem Rotor 213 in der Antriebskammer 212 angeordnet. Beim Auslösen des Gasgenerators 222 strömt allerdings zunächst kein Gas aus, sondern ein im Gasgenerator 222 verschieblich angeordneter Kolben 234 wird zunächst in Richtung auf den Rotor 213 verschoben. Er wirkt hierbei mit einem Entriegelungsschlitten 235 zusammen, der verschieblich innerhalb des Gehäuses 211 angeordnet ist. Im verriegelten Zustand, der in Fig.8 dargestellt ist, wird der Entriegelungsschlitten 235 mittels zweier Spiralfedern 238 in Richtung des Gasgenerators 222 gedrückt und hierdurch in Position gehalten. Wird der Kolben 234 beim Auslösen des Gasgenerators 222 mit Gasdruck beaufschlagt, so drückt er den Entriegelungsschlitten 235 entgegen dem Federdruck vom Gasgenerator 222 weg, wodurch die Sitzschiene gegenüber dem Fahrzeugboden entriegelt wird. Der entriegelte Zustand ist in Fig. 10 dargestellt. Bei Erreichen einer bestimmten Position des Kolbens 234 gibt eine Sollbruchstelle (nicht dargestellt) im Kolben 234 nach, wodurch nunmehr Gas aus dem Gasgenerator 222 ausströmt. Wie durch den Pfeil mit gestrichelter Linie in Fig. 10 angedeutet, strömt das Gas hierbei durch den Kolben 234 am Rotor 213 vorbei und versetzt diesen in Drehung. Hierdurch erfolgt ein teleskopartiges Ausfahren des Hubkolbens 236 und somit ein Anheben der Sitzschiene. Das Gas strömt hierbei durch eine Austrittsöffnung 218 aus der Antriebskammer 212 aus.

### Bezugszeichenliste

- 1: Antriebseinheit
- 10: pyrotechnischer Antrieb
- 11: Gehäuse
- 12: Antriebskammer
- 13: Rotor
- 14: Lamellenträger
- 15: Schlitz
- 16: Lamelle
- 17: Ausnehmung
- 18: erste Gasaustrittsöffnung
- 19: zweite Gasaustrittsöffnung
- 20: Druckkammer
- 21: Verbindungskanal
- 22: Mikrogasgenerator
- 23: Bajonettverschluss
- 24: Verschlussdeckel
- 25: Schnappverschluss
- 26: Öffnung
- 101: Antriebseinheit
- 110: pyrotechnischer Antrieb
- 111: Mantelgehäuse
- 112: Antriebskammer
- 113: Rotor
- 114: Lamellenträger
- 115: Schlitz
- 116: Lamelle
- 117: Ausnehmung
- 118: Austrittsöffnung
- 120: Druckkammer
- 121: Verbindungskanal
- 122: Mikrogasgenerator
- 127: Druckgehäuse
- 128: Auslassgehäuse
- 129: Stirnseite
- 130: Widerlager
- 131: erstes Abschlusselement
- 132: zweites Abschlusselement
- 133: Durchlasskanal
- 134: Durchlassöffnung
- 140: Gleichstrommotor
- 150: Welle
- 151: Kontakte
- 152: Tellerfeder
- 153: Anschlussbuchse
- 201: Antriebseinheit
- 210: pyrotechnischer Antrieb
- 211: Gehäuse
- 212: Antriebskammer
- 213: Rotor
- 214: Flügel
- 215: Ausnehmung
- 216: Manschettenelement
- 218: Austrittsöffnung
- 122: Mikrogasgenerator
- 234: Kolben
- 235: Entriegelungsschlitten
- 236: Hubbolzen
- 237: Außengewinde
- 238: Spiralfeder

## Patentansprüche

1. Antriebseinheit (1, 101, 201) für ein Sicherheitssystem eines Fahrzeugs, wobei die Antriebseinheit (1, 101, 201) wenigstens einen pyrotechnischen Antrieb (10, 110, 210) umfasst, mit
- einer in einem Gehäuse (11, 111, 128, 211) ausgebildeten Antriebskammer (12, 112, 212) mit einer Austrittsöffnung (18, 19, 118, 218) für Gas,
- einem in der Antriebskammer (12, 112, 212) angeordneten, axial drehbar gelagerten Rotor (13, 113, 213), sowie
- einem pyrotechnischen Gasgenerator (22, 122, 222) zum Beaufschlagen des Rotors (13, 113, 213) mit Gasdruck, wodurch der Rotor (13, 113, 213) antreibbar ist, und
- sie einen zweiten Antrieb (140) umfasst,
**dadurch gekennzeichnet, dass**
der pyrotechnische Antrieb (110) und der zweite Antrieb (140) axial zueinander angeordnet sind und auf dieselbe Welle (150) einwirken.

2. Antriebseinheit nach Anspruch 1, **dadurch gekennzeichnet, dass** der Gasgenerator (22, 122) an einer Druckkammer (20, 120) angeordnet ist, die mit der Antriebskammer (12, 112) über einen Verbindungskanal (21, 121) verbunden ist, welcher gegenüber der Druckkammer (20, 120) verjüngt ist.

3. Antriebseinheit nach einem der vorherigen Ansprüche, **dadurch gekennzeichnet, dass** der Rotor (13, 113) nach Art eines Lamellenmotors oder als Flügelrad (213) ausgebildet ist.

4. Antriebseinheit nach einem der vorherigen Ansprüche, **dadurch gekennzeichnet, dass** der Gasgenerator (122) und/oder die Druckkammer (120) axial bezüglich des Rotors (113) angeordnet sind.

5. Antriebseinheit nach einem der vorherigen Ansprüche, **dadurch gekennzeichnet, dass** der Gasgenerator (22, 222) und/oder die Druckkammer (20) radial bezüglich des Rotors (13, 213) angeordnet sind.

6. Antriebseinheit nach einem der vorherigen Ansprüche, **dadurch gekennzeichnet, dass** der Gasgenerator (13, 113) lösbar mit dem Rest des pyrotechnischen Antriebs (10, 110) verbunden ist.

7. Antriebseinheit nach einem der vorherigen Ansprüche, **dadurch gekennzeichnet, dass** der zweite Antrieb einen Elektromotor (140) umfasst und der pyrotechnische Antrieb (110) dazu ausgebildet ist, beim Inbetriebnahme einen Schutzschalter (151, 152) des Elektromotors (140) auszulösen.

8. Antriebseinheit nach Anspruch 7, **dadurch gekennzeichnet, dass** wenigstens ein Teil (113, 127, 128) des pyrotechnischen Antriebs (110) durch Beaufschlagen mit Gasdruck axial und/oder radial verschiebbar ist, wodurch der Schutzschalter ausgelöst (151, 152) wird.

9. Antriebseinheit nach einem der vorherigen Ansprüche, gekennzeichnet durch ein Getriebe, (216, 236, 237), mit dem wenigstens ein Antrieb (210) zusammenwirkt.

10. Antriebseinheit nach einem der vorherigen Ansprüche, gekennzeichnet durch ein mit dem pyrotechnischen Antrieb (10, 110) verbundenes Trägheitselement.

11. Antriebseinheit nach einem der vorherigen Ansprüche, gekennzeichnet durch ein Entriegelungselement, (235) wobei der Gasgenerator (222) dazu ausgebildet ist, auf das Entriegelungselement (235) einzuwirken, um eine Bewegung der Antriebseinheit (201) freizugeben.

12. Sicherheitssystem für ein Fahrzeugs mit einer Antriebseinheit (1, 101, 201) nach einem der Ansprüche 1 bis 11 sowie einer Fahrzeugkomponente, wobei die Antriebseinheit (1, 101, 201) dazu ausgebildet ist, bei einem Unfall oder in einer Gefahrensituation die Fahrzeugkomponente zu bewegen, um ein Verletzungsrisiko für Insassen zu verringern.

## Claims

1. A drive unit (1, 101, 201) for a safety system of a vehicle, wherein the drive unit (1, 101, 201) comprises at least one pyrotechnic drive (10, 110, 210), having:
- a drive chamber (12, 112, 212) formed in a housing (11, 111, 128, 211) with an exit opening (18, 19, 118, 218) for gas,
- a rotor (13, 113, 213) arranged in the drive chamber (12, 112, 212) and mounted so as to be axially rotatable, as well as
- a pyrotechnic gas generator (22, 122, 222) for applying gas pressure to the rotor (13, 113, 213), whereby the rotor (13, 113, 213) can be driven, and
- it comprises a second drive (140),
**characterized in that** the pyrotechnic drive (110) and the second drive (140) are arranged axially relative to each other and act on the same shaft (150).

2. The drive unit according to claim 1, **characterized in that** the gas generator (22, 122) is arranged on a pressure chamber (20, 120) which is connected to the drive chamber (12, 112) by means of a connecting channel (21, 121) that narrows toward the pressure chamber (20, 120).

3. The drive unit according to one of the preceding claims, **characterized in that** the rotor (13, 113) is designed like a vane motor or impeller (213).

4. The drive unit according to one of the preceding claims, **characterized in that** the gas generator (122) and/or the pressure chamber (120) are arranged axially relative to the rotor (113).

5. The drive unit according to one of the preceding claims, **characterized in that** the gas generator (22, 222) and/or the pressure chamber (20) are arranged radially relative to the rotor (13, 213).

6. The drive unit according to one of the preceding claims, **characterized in that** the gas generator (13, 113) is releasably connected to the remainder of the pyrotechnic drive (10, 110).

7. The drive unit according to one of the preceding claims, **characterized in that** the second drive comprises an electric motor (140), and the pyrotechnic drive (110) is designed to trip a circuit breaker (151, 152) of the electric motor (140) upon startup.

8. The drive unit according to claim 7, **characterized in that** at least one part (113, 127, 128) of the pyrotechnic drive (110) can be shifted axially and/or radially by the application of gas pressure, whereby the circuit breaker can be tripped (151, 152).

9. The drive unit according to one of the preceding claims, **characterized by** a gearbox (216, 236, 237) with which at least one drive (210) interacts.

10. The drive unit according to one of the preceding claims, **characterized by** an inertial element connected to the pyrotechnic drive (10, 110).

11. The drive unit according to one of the preceding claims, **characterized by** an unlocking element (235), wherein the gas generator (222) is designed to act on the unlocking element (235) in order to release a movement of the drive unit (201).

12. A safety system for a vehicle with a drive unit (1, 101, 201) according to one of claims 1 to 11 as well as a vehicle component, wherein the drive unit (1, 101, 201) is designed to move the vehicle component in an accident or hazardous situation in order to reduce the risk of injury to passengers.

## Revendications

1. Unité d'entraînement (1, 101, 201) pour un système de sécurité d'un véhicule, l'unité d'entraînement (1, 101, 201) comprenant au moins un entraînement pyrotechnique (10, 110, 210), avec
- une chambre d'entraînement (12, 112, 212) constituée dans un boîtier (11, 111, 128, 211), avec une ouverture de sortie (18, 19, 118, 218) pour du gaz,
- un rotor (13, 113, 213) disposé dans la chambre d'entraînement (12, 112, 212) et supporté en rotation axialement, ainsi qu'avec
- un générateur de gaz pyrotechnique (22, 122, 222) pour alimenter le rotor (13, 113, 213) en pression de gaz, ce qui fait que le rotor (13, 113, 213) peut être entraîné, et
- elle comprend un deuxième entraînement (140),
**caractérisée en ce que** l'entraînement pyrotechnique (110) et le deuxième entraînement (140) sont disposés axialement l'un par rapport à l'autre et agissent sur le même arbre (150).

2. Unité d'entraînement selon la revendication 1, **caractérisée en ce que** le générateur de gaz (22, 122) est disposé sur une chambre de pression (20, 120) qui est raccordée à la chambre d'entraînement (12, 112) par le biais d'un canal de raccordement (21, 121) qui se rétrécit par rapport à la chambre de pression (20, 120).

3. Unité d'entraînement selon une des revendications précédentes, **caractérisée en ce que** le rotor (13, 113) est constitué à la façon d'un moteur à palettes ou en tant que roue-hélice (213).

4. Unité d'entraînement selon une des revendications précédentes, **caractérisée en ce que** le générateur de gaz (122) et/ou la chambre de pression (120) sont disposés axialement par rapport au rotor (113).

5. Unité d'entraînement selon une des revendications précédentes, **caractérisée en ce que** le générateur de gaz (22, 222) et/ou la chambre de pression (20) sont disposés radialement par rapport au rotor (13, 213).

6. Unité d'entraînement selon une des revendications précédentes, **caractérisée en ce que** le générateur de gaz (13, 113) est raccordé de façon détachable au reste de l'entraînement pyrotechnique (10, 110).

7. Unité d'entraînement selon une des revendications précédentes, **caractérisée en ce que** le deuxième entraînement comprend un moteur électrique (140) et **en ce que** l'entraînement pyrotechnique (110) est constitué pour déclencher un disjoncteur (151, 152) du moteur électrique (140) lors de la mise en marche.

8. Unité d'entraînement selon la revendication 7, **caractérisée en ce qu'**au moins une partie (113, 127, 128) de l'entraînement pyrotechnique (110) peut être déplacée axialement et/ou radialement sous l'action de la pression de gaz, ce qui déclenche (151, 152) le disjoncteur.

9. Unité d'entraînement selon une des revendications précédentes, **caractérisée par** un engrenage (216, 236, 237) avec lequel coopère au moins un entraînement (210).

10. Unité d'entraînement selon une des revendications précédentes, **caractérisée par** un élément d'inertie raccordé à l'entraînement pyrotechnique (10, 110).

11. Unité d'entraînement selon une des revendications précédentes, **caractérisée par** un élément de déverrouillage (235), le générateur de gaz (222) étant constitué pour agir sur l'élément de déverrouillage (235) pour permettre un mouvement de l'unité d'entraînement (201).

12. Système de sécurité pour un véhicule avec une unité d'entraînement (1, 101, 201) selon une des revendications 1 à 11 ainsi qu'avec un composant de véhicule, l'unité d'entraînement (1, 101, 201) étant constituée pour déplacer le composant de véhicule en cas d'accident ou dans une situation de danger afin de réduire un risque de blessure pour des occupants.
